Europäisches Patentamt

European Patent Office

Office européen des brevets

(11) Veröffentlichungsnummer : **0 063 616**
**B1**

(12) # EUROPÄISCHE PATENTSCHRIFT

(45) Veröffentlichungstag der Patentschrift :
25.07.84

(21) Anmeldenummer : 81103054.3

(22) Anmeldetag : 23.04.81

(51) Int. Cl.³ : **E 02 D 29/10**, **E 03 F 3/04**,
**F 16 L 9/08**

(54) Rohrleitung aus Ortbeton und Verfahren zu ihrer Herstellung.

(43) Veröffentlichungstag der Anmeldung :
03.11.82 Patentblatt 82/44

(45) Bekanntmachung des Hinweises auf die Patenterteilung : 25.07.84 Patentblatt 84/30

(84) Benannte Vertragsstaaten :
AT BE CH DE FR GB IT LI LU NL SE

(56) Entgegenhaltungen :
RÖTHIG "Der moderne Kanalisationsbau", 1967,
VERLAGSGESELLSCHAFT RUDOLF MÜLLER, Köln-
Braunsfeld, Seiten 112-119, 228-233
WÖLFEL "Stahlbetonfertigteile im Grund- und Wasserbau", Band 1, VERLAGSGESELLSCHAFT RUDOLF
MÜLLER, Köln-Braunsfeld, Seiten 376-379

(73) Patentinhaber : STRABAG BAU - AG
Siegburger Strasse 241 Postfach 211120
D-5000 Köln 21 (DE)

(72) Erfinder : Der Erfinder hat auf seine Nennung
verzichtet

(74) Vertreter : Buschhoff, Josef, Dipl.-Ing. et al
Patentanwälte Dipl.-Ing. Buschhoff Dipl.-Ing. Hennicke, Dipl.-Ing. Vollbach Kaiser-Wilhelm-Ring 24
Postfach 190 408
D-5000 Köln 1 (DE)

### Beschreibung

Die Erfindung betrifft eine Rohrleitung aus Ortbeton mit einer Sohlauskleidung aus Klinkern, Steinzeug oder anderen keramischen Werkstoffen. Sie bezieht sich auch auf ein Verfahren zum Herstellen einer solchen Rohrleitung.

Rohrleitungen aus Ortbeton mit kreisförmigem oder eiförmigem Profil, die zum Abführen von Abwasser oder aggressiven Wässern dienen, die auf die Rohrinnenwandung eine Schleifwirkung ausüben, werden mit einer Sohlauskleidung aus Klinkern, Steinzeug oder anderen keramischen Werkstoffen versehen, die eine sehr glatte und dichte Oberfläche haben. Hierdurch werden Beschädigungen der Rohrleitung im Sohlbereich verhindert und Ablagerungen von Feststoffen vermieden, wenn nur kleine Flüssigkeitsmengen mit geringer Geschwindigkeit durch die Rohrleitung fließen, wie dies beim Trockenwetterabfluß in Abwasserkanälen der Fall ist.

Rohrleitungen aus Ortbeton der eingangs näher erläuterten Art werden bei einem bekannten Verfahren so hergestellt, daß zunächst die Rohrleitungssohle an Ort und Stelle betoniert wird, wobei in der Oberfläche eine wannenförmige Aussparung frei gelassen wird. Nach dem Erhärten des Sohlbetons wird dann in dieser wannenförmigen Aussparung die Sohlauskleidung aus Keramikplatten od. dgl. durch Kanalmaurer in einem Mörtelbett verlegt. Wenn dann dieser Mörtel abgebunden hat und genügend erhärtet ist, wird über dem Sohlbeton eine Gewölbeschalung eingebaut und der Ortbeton für die Seitenwände und den Scheitelbereich der Rohrleitung eingebracht.

Dieses bekannte Verfahren hat den Nachteil, daß zwischen dem Sohlbeton und dem aufgehenden Beton für Wände und Scheitel der Rohrleitung eine durchgehende Arbeitsfuge entsteht, die zu Undichtigkeiten Anlaß geben kann. Das Verlegen der Sohlauskleidung, das nur von speziell hierfür ausgebildeten Handwerkern ausgeführt werden kann, ist lohnintensiv und kostspielig und birgt die Gefahr von Ausführungsfehlern in sich. Vor allem aber hat das bekannte Verfahren den Nachteil, daß ständig ein sehr langer Rohrleitungsabschnitt in die Bauphase eingeschlossen ist, da die Sohlplatte der Herstellung des Wand- und Scheitelbetons weit vorauseilen muß und lange Zeiträume zum Erhärten des Sohlbetons und zum Erhärten des Auskleidungsmörtels verstreichen müssen, bis mit dem Aufbau der Gewölbeschalen und dem Betonieren des Gewölbes begonnen werden kann.

Aufgabe der Erfindung ist es, eine Rohrleitung aus Beton und ein Verfahren zu ihrer Herstellung anzugeben, womit Herstellungsfehler und Fertigungsungenauigkeiten ausgeschaltet werden und die Rohrleitung sehr rasch in weniger Arbeitstakten und verhältnismäßig kurzen Abschnitten mit geringem Aufwand an Schalung und Rüstung hergestellt werden kann.

Diese Aufgabe wird mit der Erfindung dadurch gelöst, daß mindestens der die Rohrinnenwand begrenzende Teil der Rohrleitungssohle aus Sohl-Fertigteilen besteht, welche die mit ihnen zusammen in einem Stück gefertigte Sohlauskleidung tragen und die in den die Rohrseitenwände begrenzenden Ortbeton der Rohrleitung eingebunden sind.

Diese Ausgestaltung hat den Vorteil, daß die empfindlichen Keramikteile, die sehr genau in der Rohrsohle angeordnet sein müssen und nicht beschädigt werden dürfen, unter günstigen Bedingungen in ein Fertigteil integriert zusammen mit diesem im Fertigteilwerk oder in einer Feldfabrik hergestellt werden können. Nach dem Verlegen der Sohl-Fertigteile kann sofort mit dem Betonieren der Rohrseitenwände und des Scheitelbereiches begonnen werden, da die Fertigteile in bereits erhärtetem Zustand verlegt werden.

Jedes Sohl-Fertigteil weist zweckmäßig die den statischen Erfordernissen der Rohrsohle entsprechende Dicke auf und ist an den Stirnseiten mit Aussparungen versehen, in welche eine Sohlbewehrung zur zugfesten Verbindung der Fertigteile hineinragt und die einen Vergußbeton aufnehmen. Hierdurch sind die Stöße der Fertigteile nach den Regeln des konstruktiven Ingenieurbaus ausgeführt, und die in den Ortbeton des Gewölbes eingebundenen Fertigteile haben zusammen mit diesem eine monolithische Wirkung.

Es ist vorteilhaft, wenn jedes Fertigteil auf beiden Seiten eine Abtreppung aufweist und mit einer Anschlußbewehrung versehen ist, die in den Ortbeton der Seitenwände eingreift. Durch diese Ausgestaltung ergibt sich eine gute Verbindung der Fertigteile mit dem Ortbeton der Seitenwände des Verbundquerschnittes, und es wird eine über den ganzen Querschnitt durchgehende Lagerfuge zwischen den Sohl-Fertigteilen und dem Ortbeton der Seitenwände der Rohrleitung vermieden.

Die Sohlauskleidung ist im Beton des Sohl-Fertigteils fachgerecht eingebettet und verankert, also vorzugsweise einbetoniert. Die an der Oberfläche liegenden Keramikschalen und -platten liegen deshalb stets vollflächig im Sohlbeton und können sich auch bei härtester Beanspruchung und nach langer Zeit nicht lösen.

Ein Verfahren zum Herstellen einer Rohrleitung nach der Erfindung ist dadurch gekennzeichnet, daß zunächst der untere Teil der Rohrleitungssohle als Sohlplatte in Ortbeton hergestellt und der Rohrleitungstrasse entsprechend abgezogen wird, daß dann mindestens einer der die Rohrinnenwand im Bereich der Sohle begrenzenden Sohl-Fertigteile auf der erhärteten Sohlplatte verlegt wird und anschließend Scheitelbereich und Seitenwände mindestens einer Teillänge der Rohrleitung mit einer auf dem Sohl-Fertigteil entlangbewegten Gleitschalung in Ortbeton hergestellt werden.

Diese Ausgestaltung hat den Vorteil, daß die Arbeitsfuge zwischen Rohrleitungssohle und aufgehendem Ortbeton für Seitenwände und Scheitel der Rohrleitung unterhalb der Rohrsohle liegt und daß die Sohl-Fertigteile einen verhältnismäßig kleinen Querschnitt haben können. Sie haben deshalb nur ein verhältnismäßig geringes Gewicht und können in großen Längen hergestellt werden. Der Einsatz einer Gleitschalung erlaubt rasches Arbeiten in kleinen, aufeinanderfolgenden Abschnitten, so daß der Grabenaushub dem Bau der Rohrleitung nicht sehr weit vorauseilen muß. Beim Vorfahren der Gleitschalung dienen die Sohl-Fertigteile der Gleitschalung als Fahrweg und beim Betonieren der Rohrseitenwandungen und des Scheitelbereiches als Stütze.

Nach einem anderen Verfahren nach der Erfindung kann beim Herstellen der Rohrleitung auch derart vorgegangen werden, daß zunächst mindestens eines der in voller Dicke der Rohrleitungssohle hergestellten Sohl-Fertigteile auf der nach der Rohrleitungstrasse abgeglichenen Rohrgrabensohle verlegt wird und anschließend Scheitelbereich und Seitenwände mindestens einer Teillänge der Rohrleitung mit einer auf dem Sohl-Fertigteil entlangbewegten Gleitschalung in Ortbeton hergestellt werden.

Bei diesem Verfahren ist die Herstellung einer Sohlplatte nicht notwendig, denn die Sohl-Fertigteile werden unmittelbar auf der abgeglichenen Grabensohle, ggf. unter Zwischenschaltung einer Sauberkeitsschicht, verlegt. Hierbei erstrecken sich die Sohl-Fertigteile zweckmäßig nicht über die ganze Breite des Rohrgrabens, so daß sie auch seitlich vom Ortbeton der Rohrseitenwände mit umfaßt und in diesen eingebunden werden.

Damit an der Übergangsstelle zwischen Sohlfertigteil und der in Ortbeton hergestellten Seitenwandung der Rohrleitung keine sichtbare Fuge verbleibt, werden vor dem Einbringen des Ortbetons auf den an der Rohrinnenwand angrenzenden Oberkanten der Sohl-Fertigteile zweckmäßig Formkörper zum Bilden von Ausnehmungen angeordnet. Diese Ausnehmungen werden dann nach dem Erhärten des Ortbetons mit einer Dichtungsmasse oder einem Fugenmörtel ausgefüllt.

Beim Verlegen von Sohl-Fertigteilen unmittelbar auf der Grabensohle ist es zweckmäßig, die Aussparungen in den gegeneinanderstoßenden Stirnseiten der Fertigteile unmittelbar nach deren Verlegen mit Beton zu vergießen, bevor der Gewölbebeton über den Fertigteilen eingebracht wird.

Weitere Merkmale und Vorteile der Erfindung ergeben sich aus der nachfolgenden Beschreibung und den Zeichnungen, in denen bevorzugte Ausführungsformen der Erfindung an Beispielen näher erläutert werden. Es zeigt :

Figur 1 eine Rohrleitung nach der Erfindung im soeben fertiggestellten Zustand im Querschnitt,

Figur 2 eine andere Ausführungsform einer Rohrleitung nach der Erfindung im Querschnitt und

Figur 3 die Verbindungsstelle von zwei Sohl-Fertigteilen in einem Teillängsschnitt nach Linie III-III der Fig. 2.

In einem Rohrgraben 10, dessen Grabensohle mit 11 bezeichnet ist und dessen seitliche Grabenwände 12 durch einen Verbau 13 aus Kanaldielen od. dgl. ausgesteift sind, ist nach einem weiter unten noch näher beschriebenen Verfahren eine Rohrleitung 14 hergestellt worden, die im wesentlichen aus einer Sohlplatte 15, mehreren, in Längsrichtung aneinander anschließenden Sohl-Fertigteilen 16 und dem aufgehenden Gewölbebeton 17 besteht, der die Rohrseitenwände 18 und den Rohrscheitel 19 bildet. Die Sohlplatte 15, die Seitenwände 18 und der Scheitelbereich 19 sind aus Ortbeton hergestellt, während der obere Teil der Rohrleitungssohle 20 von den Sohl-Fertigteilen 16 gebildet wird.

Die Rohrinnenwand 21 des im Querschnitt eiförmigen Rohres hat im Bereich der Sohle 20 eine Sohlauskleidung 22, die von einer teilzylindrischen Schale 23 und hieran nach oben anschließenden Platten 24 aus Steinzeug gebildet wird. Die Sohlauskleidung 22 wurde zusammen mit dem Sohl-Fertigteil 16 im Betonwerk hergestellt und besteht mit diesem zusammen aus einem Stück. Die zylindrische Schale 23 und die anschließenden Keramikplatten 24 sind im Sohl-Fertigteil 16 fachgerecht eingebettet und verankert.

Auf den Oberkanten 25 der Sohl-Fertigteile 16, die an die Rohrinnenwandung 21 angrenzen, befinden sich Ausnehmungen 26, die mit einem Fugenmörtel 27 ausgefüllt sind.

Die Rohrleitung wird nach dem erfindungsgemäßen Verfahren wie folgt hergestellt :

Auf die Grabensohle 11 wird zunächst eine Sauberkeitsschicht 28 aus Kies oder Magerbeton aufgebracht und oberflächlich geglättet. Auf diese Sauberkeitsschicht wird der untere Teil der Rohrleitungssohle 20 als Sohlplatte 15 in Ortbeton hergestellt und der Rohrleitungstrasse entsprechend abgezogen, so daß sich eine im wesentlichen ebene Oberfläche 29 ergibt.

Nach dem Erhärten der Sohlplatte, in deren am Verbau 13 anliegenden Rändern 30 Fugenbänder 31 eingelegt wurden, um das Eindringen Grundwasser in die Arbeitsfuge zu verhindern, werden dann zwei oder mehr Sohl-Fertigteile aneinander anschließend verlegt, deren Stoßfugen in an sich bekannter Weise vergossen werden. Danach werden auf den Oberkanten 25 der Fertigteile 16 hier nicht näher dargestellte Formkörper, beispielsweise Holzlatten oder Streifen aus Polystyrol, befestigt, die später entfernt werden können und die vorher beschriebenen Ausnehmungen 26 bilden. Danach wird auf den Sohl-Fertigteilen 16 eine Gleitschalung in Stellung gebracht, die dem Eiprofil des Rohres entspricht und auf der Sohlauskleidung 22 in Längsrichtung der Rohrleitung verfahrbar ist. Diese Gleitschalung ist zweckmäßig eine an sich bekannte Stahlschalung, die auf Rollen läuft und gegen den Verbau seitlich abgestützt werden kann.

Nach dem Instellungbringen der Stahlschalung wird dann der Ortbeton 32 eingefüllt, der die Rohrseitenwände 18 und den Scheitelbereich 19 des Rohres bildet.

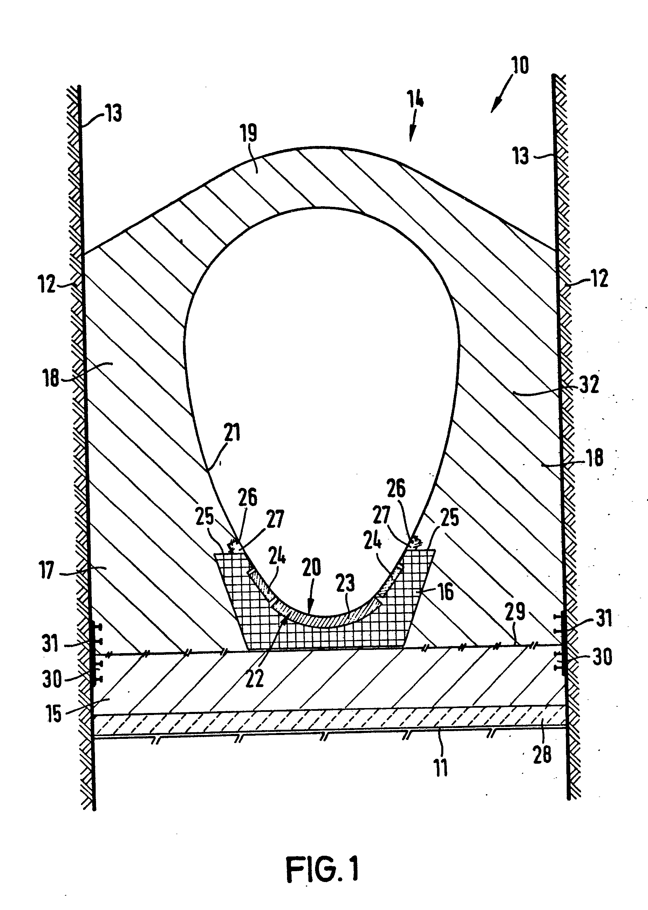

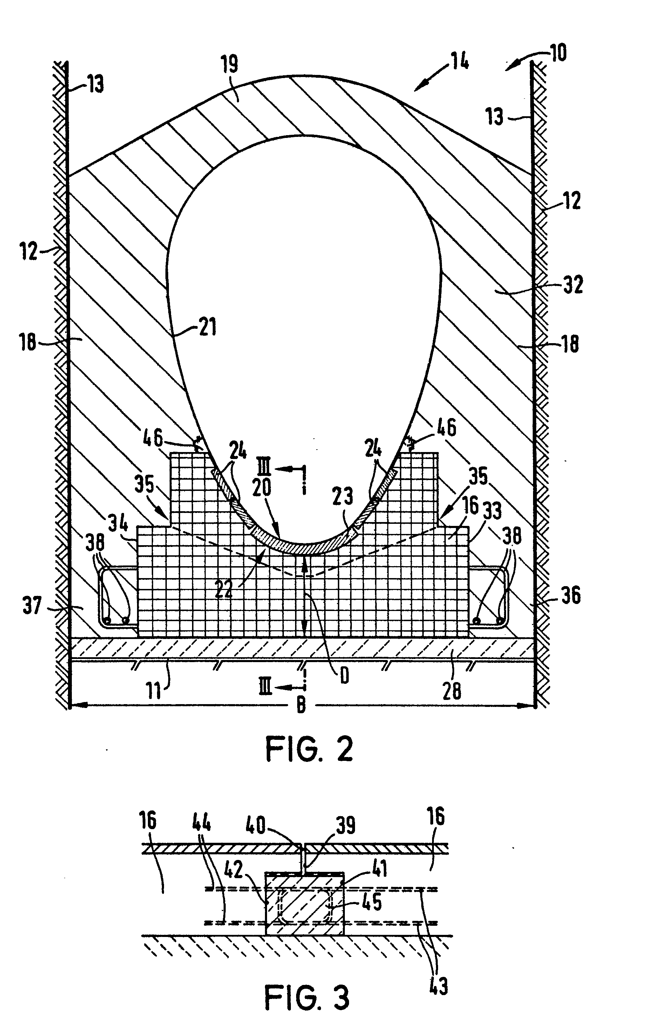

Der Aufbau der Rohrleitung der in Fig. 2 dargestellten Ausführungsform der Erfindung ist der Rohrleitung nach Fig. 1 ähnlich. Aus diesem Grunde wurden gleiche Teile in Fig. 2 mit den gleichen Bezugzeichen versehen wie bei der Rohrleitung nach Fig. 1.

Die in den Fig. 2 und 3 dargestellte Rohrleitung 14 unterscheidet sich von der Rohrleitung nach Fig. 1 dadurch, daß hier keine besondere Sohlplatte vorgesehen ist. Die Sohl-Fertigteile 16 haben bei dem in Fig. 2 dargestellten Ausführungsbeispiel eine den statischen Erfordernissen der Rohrsohle 20 entsprechende Dicke D und sind unmittelbar auf der Grabensohle 11 bzw. einer diese bedeckenden Sauberkeitsschicht 28 verlegt. Sie tragen ebenfalls eine Sohlauskleidung 22, die bei diesem Ausführungsbeispiel aus einer teilzylindrischen Sohlschale 23 und je zwei an diese anschließenden Sohlplatten 24 aus Steinzeug oder einem anderen keramischen Material besteht. Jedes der Fertigteile 16 hat auf beiden Seiten 33 und 34 eine Abtreppung 35. Das Sohl-Fertigteil 16 erstreckt sich nicht über die gesamte Breite B des Rohrgrabens 10, sondern ist etwas schmaler als der Rohrgraben. Hierdurch verbleibt auf beiden Seiten 33 und 34 der Sohl-Fertigteile ein Zwischenraum 36 bzw. 37, der beim Einbringen des Ortbetons 32 für die Rohrseitenwände 18 und den Scheitelbereich 19 mit ortbeton ausgefüllt wird. Die Seitenwände 33 und 34 sind mit einer Anschlußbewehrung 38 versehen, welche eine zugfeste Verbindung zwischen den Fertigteilen 16 und dem Ortbeton 32 herstellen.

Wie aus Fig. 3 hervorgeht, ist jedes Sohl-Fertigteil 16 an seinen Stirnseiten 39 und 40 mit je einer Aussparung 41 bzw. 42 versehen, in die eine im Fertigteil 16 untergebrachte Sohlbewehrung 43 bzw. 44 eingreift. Die Sohlbewehrungen 43 und 44 bilden in den Aussparungen 41 und 42 einander überlappende Bügel und stellen die zugfeste Verbindung zwischen den Fertigteilen 16 her, sobald die Aussparungen 41 und 42 durch einen Vergußbeton 45 ausgefüllt sind.

Analog zu dem bei dem vorhergehenden Ausführungsbeispiel beschriebenen Verfahren werden die Sohl-Fertigteile 16 auf der Sauberkeitsschicht 28 aneinander anschließend verlegt, und die Aussparungen 41 und 42 an ihren Stirnseiten werden mit Vergußbeton 45 geschlossen. Nach dem Einlegen der Formkörper 46 wird die hier nicht näher dargestellte Gleitschalung in der Sohlauskleidung 22 in Stellung gebracht und abgestützt. Danach wird der Ortbeton 32 eingebracht und hierdurch die Rohrseitenwände 18 der Scheitelbereich 19 betoniert.

Obgleich dies nicht näher dargestellt ist, können natürlich sowohl die Sohl-Fertigteile 16 als auch der Ortbeton je nach den statischen Erfordernissen schlaff bewehrt oder mit Spannstäben vorgespannt sein. Außerdem sind nach den Regeln der Baukunst in der Rohrleitung Dehnungsfugen vorgesehen, die in bekannter Weise durch Fugenbänder oder auf andere Weise gedichtet werden können.

Die Erfindung ist nicht auf die Ausführungsbeispiele beschränkt. Beispielsweise ist es auch möglich, die Rohrleitung mit Kreisprofil oder Maulprofil herzustellen. In Einzelfällen kann es auch zweckmäßig sein, die Sohlauskleidung etwas anders auszubilden oder die Sohlfertigteile auf einer anderen Unterkonstruktion zu verlegen. Der Rahmen der Erfindung wird hierdurch nicht überschritten.

**Ansprüche**

1. Rohrleitung aus Ortbeton (32) mit einer Sohlauskleidung (22) aus Klinkern, Steinzeug oder anderen keramischen Werkstoffen, dadurch gekennzeichnet, daß mindestens der die Rohrinnenwand (21) begrenzende Teil der Rohrleitungssohle (20) aus Sohl-Fertigteilen (16) besteht, welche die mit ihnen zusammen in einem Stück gefertigte Sohlauskleidung (22) tragen und die in den die Rohrseitenwände (18) begrenzenden Ortbeton (32) der Rohrleitung (14) eingebunden sind.

2. Rohrleitung nach Anspruch 1, dadurch gekennzeichnet, daß jedes Sohl-Fertigteil (16) die den statischen Erfordernissen der Rohrsohle (20) entsprechende Dicke (D) aufweist und an den Stirnseiten (39, 40) mit Aussparungen (41, 42) versehen ist, in welche eine Sohlbewehrung (43, 44) zur zugfesten Verbindung der Fertigteile (16) hineinragt und die einen Vergußbeton (45) aufnehmen.

3. Rohrleitung nach Anspruch 1 oder 2, dadurch gekennzeichnet, daß jedes Fertigteil (16) auf beiden Seiten (33, 34) eine Abtreppung (35) aufweist und mit einer Anschlußbewehrung (38) versehen ist, die in den Ortbeton (32) der Seitenwände (18) eingreift.

4. Rohrleitung nach einem der Ansprüche 1 bis 3, dadurch gekennzeichnet, daß die Sohlauskleidung (22) im Beton des Sohl-Fertigteiles (16) fachgerecht eingebettet und verankert ist.

5. Verfahren zum Herstellen einer Rohrleitung nach Anspruch 1, dadurch gekennzeichnet, daß zunächst der untere Teil der Rohrleitungssohle (20) als Sohlplatte (15) in Ortbeton hergestellt und der Rohrleitungstrasse entsprechend abgezogen wird, daß dann mindestens einer der die Rohrinnenwand (21) im Bereich der Sohle (20) begrenzenden Sohl-Fertigteile (16) auf der erhärteten Sohlplatte (15) verlegt wird und anschließend Scheitelbereich (19) und Seitenwände (18) mindestens einer Teillänge der Rohrleitung (14) mit einer auf dem Sohl-Fertigteil (16) entlangbewegten Gleitschalung in Ortbeton (32) hergestellt werden.

6. Verfahren zum Herstellen einer Rohrleitung nach einem der Ansprüche 1 bis 4, dadurch gekennzeichnet, daß zunächst mindestens eines der in voller Dicke (D) der Rohrleitungssohle (20) hergestellten Sohl-Fertigteile (16) auf der nach der Rohrleitungstrasse abgeglichenen Rohrgra-

bensohle (11) verlegt wird und anschließend Scheitelbereich (19) und Seitenwände (18) mindestens einer Teillänge der Rohrleitung (14) mit einer auf dem Sohl-Fertigteil (16) entlangbewegten Gleitschalung in Ortbeton (32) hergestellt wird.

7. Verfahren nach Anspruch 5 oder 6, dadurch gekennzeichnet, daß vor dem Einbringen des Ortbetons (32) auf den an der Rohrrinnenwand (21) angrenzenden Oberkanten (25) der Sohl-Fertigteile (16) Formkörper (46) zum Bilden von Ausnehmungen (26) angeordnet werden, die nach dem Erhärten des Ortbetons mit einer Dichtungsmasse oder einem Fugenmörtel (27) ausgefüllt werden.

8. Verfahren nach Anspruch 6 oder 7, dadurch gekennzeichnet, daß nach dem Verlegen von mindestens zwei Sohl-Fertigteilen (16) die Aussparungen (41, 42) in den gegeneinanderstoßenden Stirnseiten (39, 40) der Fertigteile (16) mit Beton (45) vergossen werden.

**Claims**

1. Tubing made of cast-in-situ concrete (32), with a bottom lining (22) of clinkers, stoneware, or other ceramic materials, characterised in that at least that portion of the tubing bottom (20) which defines the inner wall (21) of the tube consists of prefabricated bottom parts (16) which support the bottom lining (22) made integrally with the said parts, and which are bonded into the cast-in-situ concrete (32) of the tubing (14) which defines the side walls (18) of the tube.

2. Tubing according to claim 1, characterised in that each prefabricated bottom part (16) has the thickness (D) appropriate to the static requirements of the tube bottom (20) and is provided at the end faces (39, 40) with recesses (41, 42) into which a bottom reinforcement (43, 44) projects for connecting the prefabricated parts (16) so as to be fixed against pulling forces, and which receive grout (45).

3. Tubing according to claim 1 or 2, characterised in that each prefabricated part (16) is provided with a step (35) at both sides (33, 34), and is provided with a connecting reinforcement (38) which engages into the cast-in-situ concrete (32) of the side walls (18).

4. Tubing according to one of claims 1 to 3, characterised in that the bottom lining (22) is embedded and anchored appropriately in the concrete of the prefabricated bottom part (16).

5. Method for the production of tubing according to claim 1, characterised in that first of all the lower portion of the tubing bottom (20) is produced in cast-in-situ concrete as a bottom slab (15) and is levelled in the location line of the tubing route, that as least one of the prefabricated bottom parts (16) bounding the tube inner wall (21) in the region of the bottom (20) is then laid on the hardened bottom slab (15), and then the roof region (19) and side walls (18) of a least a part-length of the tubing (14) are produced in cast-in-situ concrete (32) with a sliding shuttering which is moved along on the prefabricated bottom part (16).

6. Method for the production of tubing according to one of claims 1 to 4, characterised in that first of all at least one of the prefabricated bottom parts (16) made to the full thickness (D) of the tubing bottom (20) is laid on the tubing trench bottom (11), which is levelled in accordance with the tubing route, and then the roof region (19) and the side walls (18) of at least a part-length of the tubing (14) are produced in cast-in-situ concrete (32) with a sliding shuttering which is moved along on the prefabricated bottom part (16).

7. Method according to claim 5 or 6, characterised in that before the introduction of the cast-in-situ concrete (32) profiled elements (46) are arranged on those upper edges (25) of the prefabricated bottom parts (16) which are adjacent to the tube inner wall (21), for forming recesses (26) which, after the cast-in-situ concrete has hardened, are filled with a sealing material or with pointing mortar (27).

8. Method according to claim 6 or 7, characterised in that after the laying of at least two prefabricated bottom parts (16) the recesses (41, 42) in the mutually abutting end faces (39, 40) of the prefabricated parts (16) are grouted-in with concrete (45).

**Revendications**

1. Conduite en béton coulé in situ (32) avec revêtement de cunette (22) en briques, en grès ou autres matériaux céramiques caractérisée en ce qu'au moins la partie de l'embase (20) de la conduite qui délimite la paroi interne (21) de la conduite est constituée d'éléments d'embase préfabriqués (16) qui comportent un revêtement de cunette (22) solidaire et qui sont incorporés dans le béton coulé in situ (32) délimitant les parois latérales (18) de la conduite (14).

2. Conduite suivant la revendication 1, caractérisée en ce que chaque élément d'embase préfabriqué (16) présente l'épaisseur D correspondant aux sollicitations statiques de l'embase (20) et est pourvu dans ses faces frontales (39, 40) d'évidements (41, 42) dans lesquels une armature d'embase (43, 44) se dresse en vue d'assurer une liaison des éléments préfabriqués (16) résistant à la traction après apport de béton de scellement (45).

3. Conduite suivant la revendication 1 ou 2, caractérisée en ce que chaque élément préfabriqué (16) présente de chaque côté (33, 34) un seuil (35) et une armature d'ancrage (38) laquelle s'enchâsse dans le béton coulé in situ (32) des parois latérales (18).

4. Conduite suivant l'une des revendications 1 à 3, caractérisée en ce que le revêtement de cunette (22) est disposé et ancré suivant les règles de l'art dans le béton des éléments d'embase préfabriqués (16).

5. Procédé pour la fabrication d'une conduite suivant la revendication 1, caractérisé en ce que la partie inférieure de l'embase (20) est réalisée en premier lieu sous forme d'un radier (15) en béton coulé in situ et la voie de passage de la conduite s'en trouve ainsi tracée, en ce qu'au moins un des éléments d'embase préfabriqués (16) délimitant la paroi interne (21) de la conduite dans la zone d'embase (20) est déposé sur le radier (15) après durcissement et en ce que les paroi latérales (18) et la voûte (19) sont réalisées immédiatement après en béton coulé in situ (32), au moins sur une longueur d'un élément de la conduite (14), à l'aide d'un coffrage coulissant se déplaçant longitudinalement sur l'élément d'embase préfabriqué (16).

6. Procédé pour la fabrication d'une conduite suivant l'une des revendications 1 à 4, caractérisé en ce qu'en premier lieu, au moins un des éléments préfabriqués d'embase (16) réalisé à pleine épaisseur D de l'embase (20) de la conduite est déposé sur le fond de fouille (11) égalisé, suivant la voie de passage de ladite conduite, et en ce que les parois latérales (18) et la voûte (19) sont réalisées immédiatement après en béton coulé in situ (32), au moins sur une longueur d'un élément de la conduite (14) à l'aide d'un coffrage coulissant se déplaçant longitudinalement sur l'élément d'embase préfabriqué (16).

7. Procédé suivant la revendication 5 ou 6, caractérisé en ce que, avant la coulée in situ du béton (32), des pièces de forme (46) sont disposées à la partie supérieure (25) des éléments d'embase préfabriqués (16) aux endroits de jonction avec la paroi intérieure (21) de la conduite en vue de ménager des évidements (26) lesquels sont remplis avec une matière d'étanchement ou du mortier de rejointoiement (27), après durcissement du béton coulé in situ.

8. Procédé suivant la revendication 6 ou 7, caractérisé en ce que après le placement d'au moins deux éléments d'embase préfabriqués (16) les évidements (41, 42) situés dans les faces frontales contiguës (39, 40) des éléments préfabriqués (16), sont scellés avec du béton (45).

FIG.1

FIG. 2

FIG. 3